# FASCICULE DE BREVET EUROPEEN

(11) **EP 3 755 863 B1**
(45) Date de publication et mention de la délivrance du brevet: **06.09.2023**
(21) Numéro de dépôt: 19712254.2
(22) Date de dépôt: 20.02.2019
(51) Int. Cl.: E06B 9/00, E04H 9/14, E06B 9/06

(54) **DISPOSITIF DE BARRIERE GONFLABLE, AUTONOME ET COMMUNIQUANT**
AUFBLASBARE, AUTONOME UND KOMMUNIZIERENDE BARRIEREVORRICHTUNG
INFLATABLE, AUTONOMOUS AND COMMUNICATING BARRIER DEVICE

(30) Priorité: 20.02.2018 FR 1870179
(43) Date de publication de la demande: 30.12.2020
(73) Titulaire: Correia, Manuel, 91330 Yerres (FR)
(72) Inventeur: Correia, Manuel, 91330 Yerres (FR)
(74) Mandataire: Touroude, Magali Linda
(86) Numéro de dépôt international: PCT/FR2019/000019
(87) Numéro de publication internationale: WO 2019/162578

(56) Documents cités:
- WO-A1-2018/006915
- DE-U1-202013 010 218
- GB-A- 2 541 666

## Description

### DOMAINE DE L'INVENTION

La présente invention concerne un Système de barrière anti-inondation pour bâtiment ou structure. Elle est destinée à faire barrage aux des risques d'inondations et/ou aux risques de montées des eaux. Elle est également conçue pour alerter et protéger les humains, ainsi que protéger les bâtiments et les biens. Elle est adaptable et intégrable à tous types de structures. Elle fait partie des dispositifs de protection contre les inondations.

### DESCRIPTION DE L'ART ANTERIEUR

Face aux inondations, les occupants de bâtiments disposent à peine de quelques heures, pour mettre en place des solutions de protections de leurs biens.

Il faut pour cela qu'ils soient alertés de risques d'inondations et/ou de risques de montées des eaux par les pouvoirs publics, via les médias ou tout autre type de support. Afin de limiter au maximum les dégâts, les occupants de ces sites peuvent disposer des sacs de sables, des panneaux rigides et/ou souples fixés mécaniquement sur les côtés des points d'entrées de leurs bâtiments pour empêcher l'eau d'y pénétrer. Ces systèmes de protection restent donc très rudimentaires et peu efficaces.

Le document DE 20 2013 010218 U1 divulgue un système de barrière anti-inondation pour bâtiment comprenant les caractéristiques du préambule de la revendication 1.

Il existe d'autres solutions qui tentent à leur manière de réduire l'étendue des dégâts. L'exemple qui me parait le plus pertinent, c'est celui du brevet US201414459969. En effet, ce dernier tente d'apporter une solution plus efficace que les solutions citées plus haut, en cela, le système est composé de deux plaques disposées en sandwich, une en latérale et une en périphérique munies d'au moins une pièce d'angle, d'au moins un bloc et d'au moins un joint flexible pour assurer l'étanchéité.

Par conséquent le brevet US201414459969 est fonctionnellement limité, puisqu'il doit adapter sa structure à chaque type d'ouvrants, il doit également disposer d'un système de compression externe à sa structure, ce système de compression est utilisé pour injecter un gaz, ce brevet US201414459969 nécessite obligatoirement une intervention humaine pour réaliser son installation et cela à chaque risque d'inondations. Pour que ce système soit efficace, il y a nécessité également d'anticiper les risques d'inondations et/ou de montées des eaux bien en amont, ce que ne propose pas ce type de procédé. Ce type de système de barrière anti inondations ne possède pas non plus de moyens d'alerte pour prévenir et alerter ses occupants lorsque des inondations arrivent de manières soudaines et imprévues.

En dehors du mode de réalisation décrit ci-dessous, la présente invention est capable d'autres modes de réalisation, d'être mise en pratique et/ou d'être réalisée de diverses manières. Ainsi, il doit être entendu que l'invention n'est pas limitée dans son application aux détails de construction et aux agencements de composants présentés dans la description suivante ou illustrés sur les dessins. Si seulement un mode de réalisation est décrit ici, toutes les revendications basées sur cette demande de brevet ne doivent pas être limitées à ce mode de réalisation.

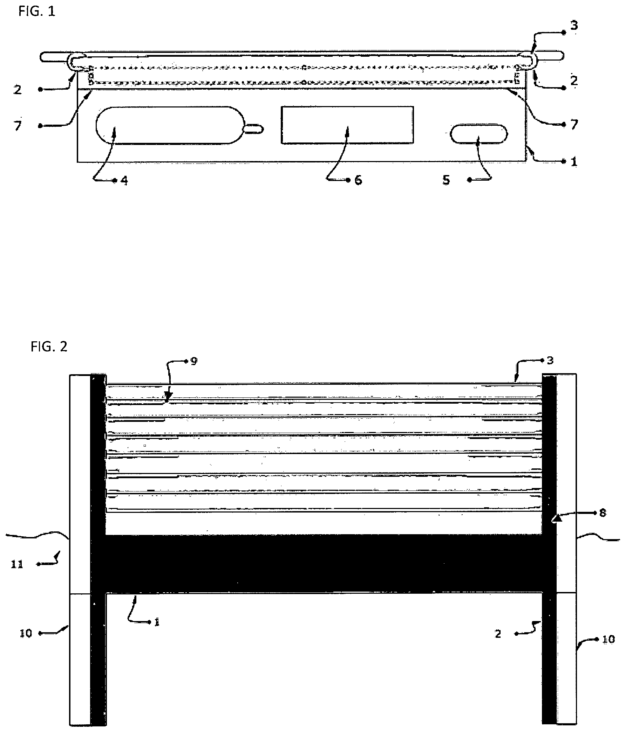

· La présente invention concerne un système de barrière anti-inondation pour bâtiment ou structure (FIG.1), elle vise à compenser les différentes absences techniques et structurelles des solutions citées plus haut, en apportant des aspects et moyens essentiels en termes de matériels, de procédés de réalisations et de mises en œuvre.

L'invention est autonome et indépendante par l'intégration d'une source d'énergie (4) au sein même de sa structure. Cela lui assure son entière autonomie de déclenchement et de mise en service.

L'invention intègre également une bâche (3) étanche déployable, pour assurer le système de barrage mécanique, lorsque celle-ci n'est pas utilisée, elle est insérée dans un logement dit de stockage.

Système de barrière anti-inondation pour bâtiment ou structure, autonome est rendu communicant par l'intégration d'un module de communication Radio (5), ce module a sa propre source d'énergie indépendante (17), ce qui lui permet d'informer et d'alerter son propriétaire sur son état de fonctionnement. L'invention est particulièrement adaptée à tous types de structures et à tous types de bâtiments situés dans des lieux à fort risques d'inondations et/ou à forts risques de montées des eaux.

Système de barrière anti-inondation pour bâtiment ou structure, selon un premier mode de réalisation, l'invention est conçue pour être fixée au sol et aux murs des différents points d'accès des structures présentant de tels risques, étant adapté et conçu pour être encastré, de manière à ne pas affecté l'aspect esthétique et visuel des structures le recevant.

L'invention est astucieusement constituée d'un cadre (1) muni de cloisons fixes et/ou de plusieurs parties mobiles. Ce cadre (1) est muni d'un système d'ouverture et/ou de fermeture de trappe. De sorte que tout ce qui se trouve à l'intérieur du système et qui le compose est mis en sécurité.

De préférence, ledit système d'ouverture et/ou de fermeture de trappe est verrouillable.

Système de barrière anti-inondation pour bâtiment ou structure pour le domaine de la prévention des risques d'inondations et/ou à de forts risques de montées des eaux, étant raccordé à une et/ou à différentes sources d'énergies telles que l'électricité et/ou hydraulique et/ou pneumatique (4), afin de permettre aux différents éléments le constituant d'interagir entre eux.

De manière préférée selon l'invention, une centrale (6) de commande permet d'assurer l'autonomie de gestion et de commande du système selon l'invention, ladite centrale de commande (6) étant à air comprimé, entraînant la circulation d'air comprimé dans différents composants pneumatiques, ou de type électrique ou hydraulique, et composée de divers tuyaux de raccordement et de moyens d'actionnements mécaniques tels que des connecteurs et des capteurs (7).

Dans ce mode de réalisation, le système de barrière anti-inondation pour bâtiment ou structure est conçu pour être complètement autonome par l'intégration d'une et/ou de plusieurs bouteilles d'air comprimé (4), installées à l'intérieur du cadre (1) et reliées au système central de commande à air comprimé (6).

De manière préférée selon l'invention, ladite bâche assure également une robustesse de structure plus importante.

Dans ce mode de réalisation, le système de barrière anti-inondation pour bâtiment ou structure intègre des rails de guidage (2) fixées au cadre et maintenues de façon étanche sur les appuis des points de passages et/ou des points d'entrées de bâtiments. Ces rails de guidage permettent au système de bâche (3) étanche de se déployer dans le dit cadre (1), afin de lui assurer également des points d'ancrage et d'étanchéité.

Par rails de guidage est entendu selon l'invention des tubes carrés et/ou ronds et/ou rectangulaires présentant une fente, autrement appelés coulisses et/ou glissières, et permettant ici le déploiement de la bâche.

De manière préférée selon l'invention, le système de bâche étanche se déploie depuis son logement dédié depuis l'intérieur du cadre (1) par lesdits rails de guidage (2), lui permettant ainsi d'assurer des points d'ancrages extérieurs et lui permettant également d'assurer son rôle de barrière étanche.

Système de barrière anti-inondation pour bâtiment ou structure dont lesdits rails de guidage (2) intègrent un système de déploiement de type ressorts et/ou de vérins hydrauliques et/ou pneumatiques et/ou électriques (8) ou bien encore de vis sans fin.

Dans ce mode de réalisation préférée nous utiliserons des vérins (8) de type pneumatique raccordés au système centrale (6) de commande à air comprimé.

Dans ce mode de réalisation, les rails de guidage (2), dits aussi points d'ancrages, permettent le déploiement de la bâche (3) par énergie pneumatique et/ou hydraulique, de préférence par remplissage pneumatique et/ou hydraulique de ses vérins et/ou de ses boudins extérieurs.

Système de barrière anti-inondation pour bâtiment ou structure comprenant un équipement dit « centrale (6) de commande à air comprimé » composé de divers tuyaux de raccordement et de moyens d'actionnements mécaniques tels que connecteurs et capteurs (7). Cette astucieuse association permet à la centrale .(6) de commande à air comprimé de gérer et de commander la circulation d'air comprimé au sein des différents éléments constituants la présente invention.

Dans ce mode de réalisation le système de barrière anti-inondation pour bâtiment ou structure -est actionné ou déclenché par un flotteur à bascule, permettant d'actionner un interrupteur fin de course.

Par flotteur à bascule est entendu selon l'invention un élément capable de flotter à la surface d'un liquide, et dont la position varie en fonction du niveau de liquide. De manière préférée, ledit flotteur selon l'invention comprend du polystyrène.

Par interrupteur fin de course est entendu selon l'invention un interrupteur qui se verra actionné quand le flotteur, par la montée du liquide, arrivera à son contact.

Selon un mode de réalisation, la présente invention intègre un système de bâche (3) disposant d'une série de boudins gonflables (9), lui assurant ainsi des points d'ancrage et une parfaite étanchéité dans les rails de guidage, ladite bâche étant repliée ou enroulée sur elle-même lorsque celle-ci n'est pas déployée ou sollicitée, car vide d'air. Elle demeure à l'intérieur du cadre (1) dans un logement dédié à cet effet, afin de ne pas gêner le passage dans lesdits points d'accès de bâtiments et ne pas déformer leur aspect esthétique. La bâche gonflable est raccordée au système central de commande à air comprimé (6).

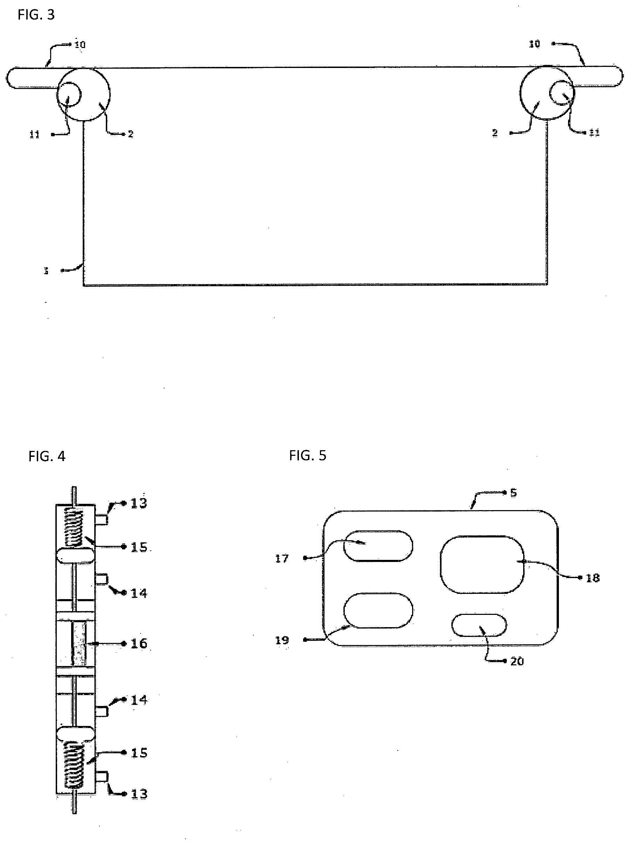

Selon un autre mode de réalisation de l'invention, les moyens d'actionnement mécanique sont déclenchés par un élément dit « cartouche fusible » (Fig. 4), c'est-à-dire ayant la particularité de changer de forme et/ou d'aspect et/ou encore d'état, lorsqu'il est en contact avec de l'eau et/ou de tout autre substance liquide.

Selon l'invention, le système central de commande peut être de type électrique ou hydraulique. Le Système de barrière anti-inondation pour bâtiment ou structure selon l'invention assure la supervision de son état de fonctionnement par l'intégration d'un module (5) de communications (Fig. 5) radio, lorsque ce dernier détecte par des moyens mécaniques (7) et/ou électroniques des risques d'inondations et/ou de forts risques de montées des eaux, il alerte alors le propriétaire du dit système par des moyens de communications radios de type LPWAN et/ou 4G LTE et/ou 5G. Selon un autre mode de réalisation, le module (5) comprend une alimentation électrique de type pile et/ou batterie (17), un microcontrôleur (18), un émetteur/récepteur Radio de type LPWAN et/ou 4G LTE et/ou 5G (19), une mémoire (20), un capteur (7) et au moins un programme d'ordinateur.

Le module (5) de communication radio assure l'envoi d'une demande d'intervention sur site, auprès d'une entreprise d'assistance, de préférence aux personnes, et/ou l'envoi d'informations sécurisées via la technologie Blockchain au propriétaire et/ou à une compagnie d'assurance et/ou à différents autres services.

Le dispositif selon l'invention est particulièrement destiné à faire barrage aux risques d'inondations et/ou aux risques de montées des eaux. Il est également conçu pour alerter et protéger les humains, ainsi que protéger les bâtiments et les biens.

### LES DESSINS ANNEXES ILLUSTRENT L'INVENTION

Fig.1 Représente la vue de dessus de l'invention
Fig.2 Représente la vue de face de l'invention, avec la barrière étanche et gonflable déployée
Fig.3 Représente la vue de dessous de l'invention, pour visualisation des rails de guidage et fixations
Fig.4 Représente la vue du Module de communication Radio, intégré au cadre (1)

### DESCRIPTIF DES NUMEROS SUR LES DESSINS ANNEXES

Pour le Système de barrière anti-inondation pour bâtiment ou structure:
1. Cadre
2. rails de guidage
3. Bâche
4. Bouteille d'air comprimé et/ou de gaz inerte
5. Module Radio
6. Console de commande
7. Capteurs
8. Vérins
9. Boudins
10. Fixation
11. Niveau sous le sol encastré
12. Flotteur à bascule / Cartouche fusible
13. Entrée d'air
14. Sortie d'air
15. Ressort
16. Matériel hydro-absorbant
17. Alimentation électrique pile et/ou batterie
18. Microcontrôleur
19. Émetteur/récepteur Radio de type LPWAN et/ou 4G LTE et/ou 5G
20. Mémoire non volatile

## Revendications

1. Système de barrière anti-inondation pour bâtiment ou structure,
comprenant une bâche (3) étanche déployable, assurant le système de barrage mécanique et demeurant dans un logement dédié lorsque celle-ci n'est pas utilisée, **caractérisé en ce que** ledit système est autonome grâce à une source d'énergie (4) au sein même de sa structure, assurant son entière autonomie de déclenchement et de mise en service, et communicant grâce à un module de communication Radio (5) possédant sa propre source d'énergie indépendante (17), permettant d'informer et d'alerter son propriétaire sur son état de fonctionnement ;
et **en ce que** le système assure la supervision de son état de fonctionnement par l'intégration du module (5) de communication radio qui détecte par des moyens mécaniques (7) et/ou électroniques (7) des risques d'inondations et/ou de forts risques de montées des eaux et alerte le propriétaire dudit système de barrières, par des moyens de communications radios de type LPWAN et/ou 4G LTE et/ou 5G (19).

2. Système de barrière selon la revendication 1, **caractérisé en ce qu'**il comprend un cadre (1), comprenant ledit logement, et muni d'un système d'ouverture et/ou de fermeture de trappe, de sorte que tout ce qui se trouve à l'intérieur du dit système et qui le compose est alors mis en sécurité.

3. Système de barrière selon l'une des revendications précédentes, **caractérisé en ce qu'**il est raccordé à une ou à différentes sources d'énergies telles que l'électricité et/ou l'hydraulique et/ou la pneumatique (4), afin de permettre aux différents éléments le constituant d'interagir entre eux.

4. Système de barrière selon l'une des revendications précédentes, **caractérisé en ce qu'**il intègre une centrale (6) de commande qui lui permet d'assurer son autonomie de gestion et de commande, ladite centrale de commande (6) étant à air comprimé, entraînant la circulation d'air comprimé dans différents composants pneumatiques, ou de type électrique ou hydraulique, et composée de divers tuyaux de raccordement et de moyens d'actionnements mécaniques tels que des connecteurs et des capteurs (7).

5. Système de barrière selon la revendication précédente, **caractérisé en ce que** dans le cas où la centrale (6) de commande est à air comprimé, ledit système est conçu pour être complètement autonome par l'intégration d'une ou de plusieurs bouteilles (4) d'air comprimé, disposées à l'intérieur du dit cadre (1) et reliées au système centrale (6) de commande à air comprimé.

6. Système de barrière selon l'une des revendications précédentes, **caractérisé en ce qu'**il intègre des rails de guidage fixées et maintenues au cadre (1), pour assurer une continuité mécanique et étanche de ses appuis sur les points de passages et/ou des points d'entrées des bâtiments.

7. Système de barrière selon la revendication précédente, **caractérisé en ce que** le système de bâche étanche se déploie depuis son logement dédié
depuis l'intérieur du cadre (1) par lesdits rails de guidage, lui permettant ainsi d'assurer des points d'ancrages extérieurs et lui permettant également d'assurer son rôle de barrière étanche.

8. Système de barrière selon les revendications 6 et 7, **caractérisé en ce que** lesdits rails de guidage intègrent un système de déploiement pour la bâche (3) de type ressorts et/ou de vérins (11) hydrauliques et/ou pneumatiques et/ou électriques ou bien encore de vis sans fin (11).

9. Système de barrière selon l'une des revendications précédentes, **caractérisé en ce que** le dit module (5) de communications radio est composé d'une alimentation électrique de type pile (17) et/ou batterie (17), d'un microcontrôleur (18), d'un émetteur/récepteur Radio de type LPWAN et/ou 4G LTE et/ou 5G (19), d'une mémoire (20), d'un capteur (7) et d'au moins un programme d'ordinateur.

10. Système de barrière selon la revendication 9, **caractérisé en ce que** le module (5) de communication radio assure une demande d'intervention sur site auprès d'une entreprise d'assistance et/ou
d'envoi d'informations sécurisées via la technologie Blockchain à son propriétaire et/ou à sa compagnie d'assurance et/ou à différents autres services.

11. Système de barrière selon l'une des revendications 4 à 10, **caractérisé en ce que** la bâche (3) étanche déployable dispose d'une série de boudins
(9) gonflables, lui assurant des points d'ancrage et une parfaite étanchéité dans les rails de guidage, ladite bâche étant repliée ou enroulée sur elle-même lorsque celle-ci n'est pas déployée ou sollicitée, et demeure à l'intérieur du cadre (1) dans un logement conçu à cet effet pour ne pas gêner le passage dans des points d'accès de bâtiments et ne pas déformer leur aspect esthétique, ladite bâche étant, dans le cas où la centrale (6) de commande est à air comprimé, raccordée au système centrale (6) de commande à air comprimé.

12. Système de barrière selon l'une des revendications 6 à 11, **caractérisé en ce que** les rails de guidage permettent le déploiement de la bâche (3) par énergie pneumatique et/ou hydraulique, de préférence par remplissage pneumatique (4) et/ou hydraulique de ses vérins et/ou de ses boudins (9) extérieurs.

13. Système de barrière selon l'une des revendications précédentes, **caractérisé en ce qu'**il est actionné ou déclenché par un flotteur à bascule, permettant d'actionner un interrupteur fin de course.

## Patentansprüche

1. Überflutungsbarrieresystem für ein Gebäude oder eine Struktur, umfassend eine entfaltbare wasserdichte Plane (3), die das mechanische Dammsystem bildet und in einem speziellen Gehäuse verbleibt, wenn sie nicht verwendet wird, **dadurch gekennzeichnet, dass** das System dank einer Energiequelle (4) innerhalb seiner Struktur autonom ist, was seine vollständige Autonomie bei der Auslösung und Inbetriebnahme gewährleistet, und über ein Funkkommunikationsmodul (5), das über eine eigene unabhängige Energiequelle (17) verfügt und es ermöglicht, seinen Eigentümer über seinen Betriebszustand zu informieren und zu alarmieren, kommuniziert;
**und dadurch, dass** das System die Überwachung seines Betriebszustands durch Einbetten des Funkkommunikationsmoduls (5) gewährleistet, das durch mechanische (7) und/oder elektronische (7) Mittel die Risiken von Überschwemmungen und/oder hohe Risiken von steigendem Wasser erkennt und den Eigentümer des Barrieresystems über Funkkommunikation vom Typ LPWAN und/oder 4G LTE und/oder 5G (19) warnt.

2. Barrieresystem nach Anspruch 1, **dadurch gekennzeichnet, dass** es einen Rahmen (1) umfasst, der das Gehäuse umfasst, und mit einem System zum Öffnen und/oder Schließen einer Luke versehen ist, sodass alles, was sich innerhalb des Systems befindet und dieses bildet, gesichert ist.

3. Barrieresystem nach einem der vorstehenden Ansprüche,
**dadurch gekennzeichnet, dass** es mit einer oder mehreren verschiedenen Energiequellen, wie Strom und/oder Hydraulik und/oder Pneumatik (4) verbunden ist, sodass die verschiedenen Elemente miteinander interagieren können.

4. Barrieresystem nach einem der vorstehenden Ansprüche,
**dadurch gekennzeichnet, dass** es eine zentrale Steuereinheit (6) enthält, die es ihm ermöglicht, seine Verwaltungs- und Steuerungsautonomie zu gewährleisten, wobei die zentrale Steuereinheit (6) mit Druckluft ist, wodurch die Zirkulation der Druckluft in verschiedenen pneumatischen oder elektrischen oder hydraulischen Komponenten bewirkt wird, und aus verschiedenen Verbindungsleitungen und mechanischen Betätigungsmitteln wie Anschlüssen und Sensoren (7) besteht.

5. Barrieresystem nach dem vorstehenden Anspruch,
**dadurch gekennzeichnet, dass** in dem Fall, dass die zentrale Steuereinheit (6) mit Druckluft ist, das System so konfiguriert ist, dass es völlig autonom ist, indem eine oder mehrere Druckluftflaschen (4) integriert sind, die im Inneren des Rahmens (1) angeordnet und mit dem zentralen Druckluftsteuersystem (6) verbunden sind.

6. Barrieresystem nach einem der vorstehenden Ansprüche,
**dadurch gekennzeichnet, dass** es Führungsschienen enthält, die an dem Rahmen (1) befestigt und gehalten werden, um eine mechanische und wasserdichte Kontinuität seiner Stützen an den Durchgangspunkten und/oder Eintrittspunkten der Gebäude zu gewährleisten.

7. Barrieresystem nach dem vorstehenden Anspruch,
**dadurch gekennzeichnet, dass** das wasserdichte Planensystem durch die Führungsschienen aus seinem speziellen Gehäuse aus dem Inneren des Rahmen (1) entfaltet wird, wodurch es ermöglicht wird, äußere Ankerpunkte zu gewährleisten und ihm gleichzeitig ermöglicht wird, seine Rolle als wasserdichte Barriere zu erfüllen.

8. Barrieresystem nach den Ansprüchen 6 und 7, **dadurch**
**gekennzeichnet, dass** die Führungsschienen ein Entfaltungssystem für die Plane (3) enthalten, das federgelagert ist und/oder hydraulische und/oder pneumatische und/oder elektrische Zylinder (11) oder auch Endlosschrauben (11) besitzt.

9. Barrieresystem nach einem der vorstehenden Ansprüche,
**dadurch gekennzeichnet, dass** das Funkkommunikationsmodul (5) aus einer durch Batterie (17) oder Akku (17) betriebenen Stromversorgung, einem Mikrocontroller (18), einem Funksender/Empfänger vom Typ LPWAN und/oder 4G LTE und/oder 5G (19), einem Speicher (20), einem Sensor (7) und mindestens einem Computerprogramm zusammengesetzt ist.

10. Barrieresystem nach Anspruch 9, **dadurch gekennzeichnet, dass** das das Funkkommunikationsmodul (5) eine Anforderung eines Vor-Ort-Eingriffs von einem Hilfsunternehmen und/oder ein Senden sicherer Informationen über die Blockchain-Technologie an seinen Eigentümer und/oder seine Versicherungsgesellschaft und/oder verschiedene andere Dienste gewährleistet.

11. Barrieresystem nach einem der Ansprüche 4 bis 10,
**dadurch gekennzeichnet, dass** die entfaltbare wasserdichte Plane (3) eine Reihe aufblasbarer Wülste (9) aufweist, die ihr Verankerungspunkte und eine perfekte Abdichtung in den Führungsschienen verleihen, wobei die Plane zusammengefaltet oder aufgerollt ist, wenn sie nicht entfaltet oder belastet ist, und im Inneren des Rahmens (1) in einer dafür vorgesehenen Aufnahme verbleibt, um den Durchgang zu Gebäudezugängen nicht zu behindern und nicht ihr ästhetisches Erscheinungsbild zu beeinträchtigen, wobei die Plane in dem Fall, in dem die zentrale Steuereinheit (6) mit Druckluft ist, mit dem zentralen Druckluftsteuersystem (6) verbunden ist.

12. Barrieresystem nach einem der Ansprüche 6 bis 11,
**dadurch gekennzeichnet, dass** die Führungsschienen das Entfalten der Plane (3) mittels pneumatischer und/oder hydraulischer Energie ermöglichen, vorzugsweise durch pneumatische (4) und/oder hydraulische Befüllung seiner Zylinder und/oder seiner externen Wülste (9).

13. Barrieresystem nach einem der vorstehenden Ansprüche,
**dadurch gekennzeichnet, dass** es durch einen Wippenschwimmer betätigt oder ausgelöst wird, der die Betätigung eines Endschalters ermöglicht.

## Claims

1. Anti-flooding barrier system for a building or structure, comprising a deployable sealing tarpaulin (3) which provides the mechanical barrier system and remains in a dedicated recess when not in use, **characterized in that** said system is autonomous by virtue of an energy source (4) within its own structure, ensuring its complete triggering and implementation autonomy, and it communicates by means of a radio communication module (5) having its own independent energy source (17), making it possible to inform and alert its owner about its operating state;
**and in that** the system ensures the monitoring of its operating state by the incorporation of the radio communication module (5) which detects, by mechanical (7) and/or electronic (7) means, risks of flooding and/or high risks of rising water and alerts the owner of said barrier system, by LPWAN and/or 4G LTE and/or 5G radio communication means (19).

2. Barrier system according to claim 1, **characterized in that** it comprises a frame (1), comprising said recess, and provided with a system for opening and/or closing a hatch, so that everything inside said system and constituting it is then safe.

3. Barrier system according to any of the preceding claims,
**characterized in that** it is connected to one or more energy sources such as electricity and/or hydraulics and/or pneumatics (4), in order to allow the various elements constituting it to interact with one another.

4. Barrier system according to any of the preceding claims,
**characterized in that** it incorporates a control unit (6) which allows it to ensure its management and control autonomy, said control unit (6) being a compressed-air unit, causing the circulation of compressed air in various pneumatic, electrical or hydraulic components, and consisting of various connection pipes and mechanical actuation means such as connectors and sensors (7).

5. Barrier system according to the preceding claim, **characterized in that** when the control unit (6) is a compressed-air unit, said system is designed to be completely autonomous by the incorporation of one or more compressed-air tanks (4) which are arranged inside said frame (1) and connected to the compressed-air control unit system (6).

6. Barrier system according to any of the preceding claims,
**characterized in that** it incorporates guide rails secured and held to the frame (1), in order to ensure mechanical and sealing continuity of its supports at the building passage points and/or inlet points.

7. Barrier system according to the preceding claim, **characterized in that** the sealing tarpaulin system is deployed from its dedicated recess from the inside of the frame (1) by said guide rails, thus enabling it to ensure external anchoring points and also enabling it to ensure its role of a sealing barrier.

8. Barrier system according to claims 6 and 7, **characterized in that** said guide rails incorporate a deployment system for the tarpaulin (3) such as springs and/or cylinders (11) that are hydraulic and/or pneumatic and/or electric, or even endless screws (11).

9. Barrier system according to any of the preceding claims,
**characterized in that** said radio communication module (5) consists of an electrical power supply such as a battery cell (17) and/or battery (17), a microcontroller (18), an LPWAN and/or 4G LTE and/or 5G radio transceiver (19), a memory (20), a sensor (7) and at least one computer program.

10. Barrier system according to claim 9, **characterized in that** the radio communication module (5) enables a request for on-site intervention from an assistance company and/or the sending of secure information via Blockchain technology to its owner and/or its insurance company and/or various other services.

11. Barrier system according to any of claims 4 to 10, **characterized in that** the deployable sealing tarpaulin (3) has a series of inflatable strands (9) which provide it with anchoring points and perfect sealing in the guide rails, said tarpaulin being folded or wound up on itself when not deployed or loaded, and it remains inside the frame (1) in a recess designed for this purpose so as not to impede passage through building access points or distort their aesthetic appearance, said tarpaulin being, when the control unit (6) is a compressed-air unit, connected to the compressed-air control unit system (6).

12. Barrier system according to any of claims 6 to 11, **characterized in that** the guide rails allow the deployment of the tarpaulin (3) by pneumatic and/or hydraulic energy, preferably by pneumatic (4) and/or hydraulic filling of its cylinders and/or of its outer strands (9).

13. Barrier system according to any of the preceding claims,
**characterized in that** it is actuated or triggered by a rocker float, making it possible to actuate an end-of-travel switch.
